(19) **Europäisches Patentamt / European Patent Office / Office européen des brevets**

(11) **EP 2 505 681 B1**

(12) **EUROPEAN PATENT SPECIFICATION**

(45) Date of publication and mention
of the grant of the patent:
**06.07.2022 Bulletin 2022/27**

(21) Application number: **10833421.0**

(22) Date of filing: **25.11.2010**

(51) International Patent Classification (IPC):
**C22C 38/00** (2006.01)  **B21B 3/00** (2006.01)
**B21C 37/08** (2006.01)  **B21C 37/30** (2006.01)
**B23K 9/025** (2006.01)  **B23K 9/23** (2006.01)
**C21D 8/02** (2006.01)  **C22C 38/14** (2006.01)
**C22C 38/58** (2006.01)  **C21D 8/10** (2006.01)
**C21D 9/14** (2006.01)  **C21D 9/08** (2006.01)
**C22C 38/02** (2006.01)  **C22C 38/04** (2006.01)
**C22C 38/06** (2006.01)  **C22C 38/12** (2006.01)
**B23K 9/18** (2006.01)  **B23K 9/028** (2006.01)
**C22C 38/08** (2006.01)

(52) Cooperative Patent Classification (CPC):
**B23K 9/18; B23K 9/0282; C21D 8/10; C21D 8/105;
C21D 9/08; C21D 9/14; C22C 38/001;
C22C 38/002; C22C 38/02; C22C 38/04;
C22C 38/06; C22C 38/08; C22C 38/12;
C22C 38/14;** C21D 2211/002

(86) International application number:
**PCT/JP2010/071527**

(87) International publication number:
**WO 2011/065578 (03.06.2011 Gazette 2011/22)**

(54) **WELDED STEEL PIPE FOR LINEPIPE WITH SUPERIOR COMPRESSIVE STRENGTH AND SUPERIOR TOUGHNESS, AND PROCESS FOR PRODUCING SAME**

GESCHWEISSTES STAHLROHR FÜR EIN LEITUNGSROHR MIT HOHER DRUCKFESTIGKEIT UND HOHER HÄRTE SOWIE VERFAHREN ZU SEINER HERSTELLUNG

TUYAU D'ACIER SOUDÉ POUR TUBE DE CANALISATION PRÉSENTANT UNE RÉSISTANCE À LA COMPRESSION SUPÉRIEURE ET UNE TÉNACITÉ SUPÉRIEURE, ET PROCÉDÉ DE PRODUCTION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2009 JP 2009267258**

(43) Date of publication of application:
**03.10.2012 Bulletin 2012/40**

(73) Proprietor: **JFE Steel Corporation
Tokyo, 100-0011 (JP)**

(72) Inventors:
• **ISHIKAWA, Nobuyuki**
  **Tokyo 100-0011 (JP)**

• **TANIZAWA, Akihiko**
  **Tokyo 100-0011 (JP)**
• **SUEYOSHI, Hitoshi**
  **Tokyo 100-0011 (JP)**
• **HORIE, Masayuki**
  **Tokyo 100-0011 (JP)**
• **KIYOTO, Yasumitsu**
  **Tokyo 100-0011 (JP)**

(74) Representative: **Grünecker Patent- und
Rechtsanwälte
PartG mbB
Leopoldstraße 4
80802 München (DE)**

**(Cont. next page)**

(56) References cited:
EP-A1- 1 995 339      EP-A1- 2 505 682
JP-A- 2002 102 931    JP-A- 2003 340 518
JP-A- 2006 183 133    JP-A- 2006 183 133
JP-A- 2007 119 884    JP-A- 2008 121 036
JP-A- 2009 091 653    JP-A- 2009 127 069
JP-A- 2009 221 534

• DATABASE WPI Week 200839 Thomson
Scientific, London, GB; AN 2008-G16728
XP002694501, -& JP 2008 121036 A (KAWASAKI
STEEL CORP) 29 May 2008 (2008-05-29)

**Description**

[Technical Field]

The present invention relates to a linepipe for transporting crude oil, natural gas or the like, and more particularly to a steel pipe for a linepipe having high compressive strength and high fracture toughness suitably used as a linepipe for deep-sea having a heavy wall thickness which is required to exhibit high collapse resistant performance, and a manufacturing method thereof. The compressive strength used in the present invention means, unless otherwise specified, compressive yield strength or 0.5% compressive proof strength. Also, the tensile yield strength means, unless otherwise specified, tensile yield strength or 0.5% tensile proof strength, wherein tensile strength means maximum stress obtained in a tensile test as usually defined.

[Background Art]

Along with the increase in demand for energy in recent years, the development of pipelines for crude oil or natural gas has been promoted, and various pipelines which are constructed in oceans have been also developed to cope with a situation where gas fields or oil fields are located at remoter places or versatility in transport routes. To prevent a linepipe used for an offshore pipeline from collapsing due to water pressure, the linepipe for an offshore pipeline is formed of a linepipe having a wall thickness larger than a wall thickness of a linepipe for an onshore pipeline. Further, the linepipe used for offshore pipeline is required to exhibit high roundness. With respect to material quality of the linepipe, the linepipe is required to possess high compressive strength to cope with compression stress generated in the circumferential direction of the pipe by external pressure.

It is often the case where the DNV standard (Det Norske Veritas standard) (OSF-101) is adopted in designing offshore pipelines. In this standard, collapse pressure is obtained using, as factors for deciding collapse pressure due to external pressure, a pipe diameter D, a wall thickness t, the roundness $f_0$ of a pipe and tensile yield strength fy of a material. However, the compressive strength changes depending on a manufacturing method of pipes even when pipes have the same size and the same tensile strength and hence, tensile yield strength is multiplied by a coefficient ($\alpha$fab) which differs depending on the manufacturing method. In the case of a seamless pipe, this DNV standard coefficient is 1.0, that is, tensile yield strength can be directly applied. However, in the case of a pipe manufactured by a UOE forming process, 0.85 is given as the coefficient. This is because, in the case of a pipe manufactured by a UOE forming process, compressive strength becomes lower than tensile yield strength. To consider a factor which causes such lowering of compressive strength, a UOE steel pipe is subjected to a pipe expanding process in a final step of pipe making so that the UOE steel pipe receives compression after tensile deformation is imparted to the pipe in the circumferential direction of the pipe whereby the compressive strength is lowered by a Bauschinger effect. Accordingly, it is necessary to increase compressive strength of the pipe for increasing collapse resistant performance. However, in the case of a steel pipe which is manufactured through a pipe expanding process in cold forming, there exists a drawback that compressive yield strength is lowered by a Bauschinger effect.

Many studies have been made with respect to the enhancement of collapse resistant performance of a UOE steel pipe, and patent document 1 discloses a method where a steel pipe is heated by Joule heating and, after the steel pipe is expanded, a temperature is held for a fixed time or more. According to this method, dislocation brought about by the pipe expansion is eliminated or dispersed and hence, the steel pipe can acquire a high yield point. However, it is necessary to continue Joule heating for holding the temperature for 5 minutes or more after the pipe expansion and hence, productivity is deteriorated.

Further, in the same manner as patent document 1, as a method of recovering compressive yield strength lowered by a Bauschinger effect by heating the steel pipe after pipe expansion, patent document 2 proposes a method where an outer surface of a steel pipe is heated to a temperature higher than a temperature of an inner surface of the steel pipe so that compressive yield strength on an inner surface side increased by strain hardening is maintained, and compressive yield strength on an outer surface side lowered by a Bauschinger effect is increased.

Further, patent document 3 proposes a method where accelerated cooling is performed from an Ar$_3$ temperature or above to 300°C or below after hot rolling in a process of manufacturing a steel plate made of Nb-Ti added steel, a steel pipe is made from the steel plate by a UOE forming process and, thereafter, the steel pipe is heated at a temperature of 80 to 550°C.

However, with respect to the method disclosed in patent document 2, it is extremely difficult to separately control the heating temperature and the heating time of the outer surface and the inner surface of the steel pipe in terms of the actual manufacture of a steel pipe, and particularly to control quality of the steel pipe in a mass production process is extremely difficult. The method disclosed in patent document 3 also has a drawback that it is necessary to set a stop temperature of accelerated cooling in the manufacture of the steel plate at the low temperature of 300°C or below and hence, the distortion of the steel plate is increased whereby when a steel pipe is made from the steel plate by a UOE forming process, roundness of the steel pipe is lowered. The method disclosed in patent document 3 further has a drawback that since the accelerated cooling is performed from the $Ar_3$ temperature or above, it is necessary to perform rolling at a relatively high temperature so that fracture toughness is deteriorated.

On the other hand, as a method of increasing compressive strength by a steel pipe forming method without performing heating after pipe expansion, patent document 4 discloses a method where a compression rate at the time of O shape forming is set larger than an expansion rate in the steel expansion performed after the O shape forming. According to the method disclosed in patent document 4, there is substantially no tensile pre-strain in the circumferential direction of a steel pipe and hence, a Bauschinger effect does not occur whereby the steel pipe can acquire high compressive strength. However, when the expansion rate is low, it becomes difficult for the steel pipe to maintain roundness thus giving rise to a possibility that collapse resistant performance of the steel pipe is deteriorated.

Patent document 5 discloses a method where collapse resistant performance is enhanced by making a diameter of a steel pipe where a seam weld and an axially symmetric part of the seam weld (a position 180° away from the seam weld, and a portion where compressive strength on an outer surface side is low) are set as end points become the maximum diameter of the steel pipe. However, a portion of the steel pipe which may cause a problem on collapse in the actual pipeline construction is a portion of the steel pipe which reaches a sea bed and is subjected to bending deformation (sag-bend portion), and the pipeline is constructed on the sea bed by girth weld irrelevant to the position of the seam weld of the steel pipe. Accordingly, even when the end point to the seam weld is set on a major axis, the method does not exhibit any practical effects.

Further, patent document 6 proposes a steel plate where reheating is performed after accelerated cooling so that a fraction of a hard second phase in a steel plate surface layer portion is decreased, and the difference in hardness between the surface layer portion and the plate thickness center portion is made small and hence, the uniform strength distribution in the plate thickness direction is acquired whereby lowering of yield stress caused by a Bauschinger effect can be made small.

Further, patent document 7 proposes a manufacturing method of a steel plate for a linepipe having high strength and sour gas resistance with a plate thickness of 30mm or more, wherein in reheating treatment after accelerated cooling, a steel plate surface layer portion is heated while suppressing the elevation of a temperature of a steel plate center portion. Due to such a manufacturing method, a fraction of a hard second phase of a steel plate surface layer portion can be decreased while suppressing lowering of DWTT property (Drop Weight Tear Test property) and hence, a steel plate where hardness of the steel plate surface layer portion is decreased and has small irregularities in material quality is acquired, and also the reduction of a Bauschinger effect due to the decrease of the fraction of the hard second phase can be also expected.

However, in the technique described in patent document 6, it is necessary to perform heating such that heating reaches a center portion of the steel plate at the time of heating thus causing lowering of DWTT property. Accordingly, the application of the technique to a linepipe having a heavy wall thickness for deep sea has been difficult.

Further, a Bauschinger effect is influenced by various microstructure factors such as a grain size or an amount of solid solute carbon and hence, a steel pipe having high compressive strength cannot be acquired with the mere reduction of a hard second phase as in the case of a technique described in patent document 7. Further, under the reheating condition disclosed in patent document 7, it is difficult for the steel pipe to acquire a balance among excellent tensile strength, excellent compressive strength and excellent DWTT property due to coarsening of cementite through coagulation, precipitation of a carbide forming element such as Nb or C and lowering of solid solute C caused by the coarsening and the precipitation of the carbide forming element.

JP 2009 127069 A discloses a high toughness steel plate for line pipe and a manufacturing method therefor.

[Prior art literature]

[Patent document]

[Patent document 1] JP-A-9-49025
[Patent document 2] JP-A-2003-342639
[Patent document 3] JP-A-2004-35925
[Patent document 4] JP-A-2002-102931
[Patent document 5] JP-A-2003-340519
[Patent document 6] JP-A-2008-56962
[Patent document 7] JP-A-2009-52137

[Summary of the Invention]

[Task to be solved by the Invention]

The present invention has been made under the above-mentioned circumstances, relating to a linepipe having a heavy wall thickness and having high strength and excellent fracture toughness necessary for the application of the steel pipe to a sea bed pipeline, and it is an object of the present invention to provide a steel pipe for a linepipe having a heavy wall thickness, enhancing compressive strength by suppressing lowering of yield stress caused by a Bauschinger effect by optimizing the metal microstructure of a steel plate, and exhibiting excellent fracture toughness in a base material and a welded heat affected zone without requiring particular forming conditions in forming the steel pipe and without requiring heat treatment after pipe making.

[Means for solving the Task]

The inventors of the present invention have carried out various experiments to achieve a steel pipe which satisfies both the enhancement of compressive strength which is suppressed by a Bauschinger effect and the acquisition of strength and fracture toughness, and have made following findings.

(1) Lowering of compressive strength due to a Bauschinger effect is caused by the generation of back stress due to the integration of dislocation in an interface between different phases or in a hard second phase. To prevent the lowering of compressive strength caused by a Bauschinger effect, firstly, it is effective to decrease a ferrite-bainite interface and the hard second phase such as M-A constituent (MA) which are places where dislocation is integrated. For this end, in the metal microstructure, fractions of the soft ferrite phase and the hard MA are decreased thus forming the metal microstructure into the microstructure mainly constituted of bainite whereby lowering of compressive strength caused by a Bauschinger effect can be suppressed.

(2) High-strength steel manufactured by accelerated cooling, particularly a steel plate having a heavy wall thickness used for a sea-bed pipeline contains a large amount of alloy elements for acquiring required strength so that the steel plate has high hardenability whereby it is difficult to completely suppress the formation of MA. However, by making the bainite microstructure fine, by finely dispersing formed MA and by decomposing MA into cementite by reheating or the like after accelerated cooling, a Bauschinger effect due to the second phase can be decreased.

(3) By properly setting the C content and an addition content of carbide formation elements such as Nb in the steel material thus sufficiently ensuring solid solute C, an interaction between dislocation and solid solute C is enhanced whereby the movement of dislocation at the time of inversion of a load is impeded so that lowering of compressive strength due to back stress can be suppressed.

(4) To enhance fracture toughness of the base material, particularly, the DWTT property of the base material, it is effective to make the microstructure fine by lowering a rolling temperature at the time of hot rolling of a steel plate. However, when the rolling temperature is extremely low, a ferrite phase is formed so that the microstructure after accelerated cooling becomes the structure where bainite and ferrite are mixed to each other thus increasing a Bauschinger effect. To suppress the formation of ferrite, it is necessary to perform a strict control where a rolling completion temperature and an accelerated cooling start temperature are set to fixed temperatures or above. To enhance the DWTT property of the base material under such limiting conditions, it is effective to reduce an amount of cementite formed at the time of air cooling after stopping the accelerated cooling. That is, by controlling the accelerated cooling stop temperature to the fixed temperature or below, an amount of non-transformed austenite at the time of stopping cooling can be reduced and hence, the formation of cementite in succeeding air cooling can be suppressed whereby the steel plate can acquire the high base material DWTT property.

(5) In a welded heat affected zone (hereinafter also referred to as HAZ) of a seam weld of a steel pipe, a coarse-grained heat-affected zone (CGHAZ) which is heated to a temperature exceeding 1400°C at the time of welding and an intercritically reheated coarse grained heat affected zone (ICCGHAZ) which CGHAZ is heated to dual phase zone by next welding are formed, and the formation of MA becomes particularly apparent in such zones and hence, HAZ fracture toughness is deteriorated. To suppress such lowering of fracture toughness, it is effective to suppress an amount of MA to a fixed value or less by forming the microstructure of the welded heat affected zone into the microstructure mainly formed of bainite. For this end, it is necessary to strictly restrict addition amounts of Si and Nb which promote the formation of MA. Further, the suppression of hardness of the heat affected zone is also effective for enhancing HAZ fracture toughness and hence, the strict suppression of content of P which is liable to locally form a hardened zone due to micro segregation is also extremely effective for enhancing HAZ fracture toughness. In addition to the restriction of composition elements which influence the above-mentioned HAZ fracture toughness, the utilization of TiN precipitates is also effective for suppressing grains of the HAZ from becoming coarse due to heat, and this effect can be maximized by limiting Ti and N within fixed ranges.

The present inventions have been made based on such findings and as further specified in the appended claims.

[Advantage of the Invention]

According to the present invention, it is possible to acquire a steel pipe for a linepipe having high strength and excellent fracture toughness necessary for the application of the steel pipe to a sea-bed pipeline, having high compressive strength and further exhibiting excellent fracture toughness.

[Brief Description of the Drawings]

Fig. 1 is a view showing compressive strength when an expansion rate was changed in No. 7 (kind of steel: D) in Table 2-1 and Table 3-1.
Fig. 2 is a view showing the relationship between pre-strain before inversion and back stress corresponding to an expansion rate obtained by repeatedly applying a load to a round bar tensile specimen cut out from a steel plate of No. 9 (kind of steel: E) in Table 2-1 and Table 3-1.

[Mode for carrying out the Invention]

The mode for carrying out the present invention is explained hereinafter. Firstly, reasons for limiting the respective constitutional elements of the present invention are explained.

1. Chemical composition

Firstly, the reasons for limiting chemical contents contained in a steel plate having high strength and high fracture toughness of the present invention are limited are explained. In all components, content% means mass%. In the present invention, a numerical value of a next digit within a numerical value range of each chemical composition or the like defined hereinafter is 0. For example, 0.03 to 0.08% C means 0.030 to 0.080% C, and 0.06% or less Al means 0.060% or less Al. Further, also with respect to a grain size, $5\mu m$ or less means $5.0\mu m$ or less. Further, a fraction of MA or the like of 3% or less means a fraction of MA or the like of 3.0% or less.

C: 0.03 to 0.08%

C is the most effective element for increasing strength of a steel plate which is manufactured by accelerated cooling. However, when the content of C is less than 0.03%, the steel plate cannot ensure sufficient strength, while when the content of C exceeds 0.08%, fracture toughness is remarkably deteriorated. Further, when the content of C exceeds 0.08%, the formation of MA in the base material and a welded heat affected zone is accelerated and hence, the content of C exceeding 0.08% is undesirable. Accordingly, the content of C is set to a value which falls within a range of 0.03 to 0.08%.

Si: 0.05% or less

Si is added to the steel for deoxidation. Such an effect can be acquired when the content of Si is 0.01% or more. On the other hand, when the content of Si exceeds 0.10%, the formation of MA in the welded heat affected zone is increased thus remarkably deteriorating fracture toughness of the weld. When higher HAZ fracture toughness is required, the content of Si is set to 0.05% or less.

Mn: 1.00 to 2.00%

Mn is added to the steel for enhancing strength and fracture toughness of steel. When the content of Mn is less than 1.00%, such effects are not sufficient, while when the content of Mn exceeds 2.00%, weldability of steel is deteriorated. Accordingly, the content of Mn is set to a value which falls within a range of 1.00 to 2.00%. The content of Mn is more preferably set to a value which falls within a range of 1.30 to 2.00%. On the other hand, Mn has an effect of improving fracture toughness by suppressing the formation of grain boundary ferrite in the HAZ microstructure and hence, to ensure HAZ fracture toughness, it is desirable to set the content of Mn added to 1.5% or more. It is more preferable to set the content of Mn added to a value which falls within a range of more than 1.50 to 2.00%.

P: 0.010% or less

P is an element which is present in steel as an unavoidable impurity and increases strength by solid solution strengthening. However, P is liable to form a locally hardened zone particularly by micro segregation so that P particularly deteriorates HAZ fracture toughness. According to the present invention, to enhance HAZ fracture toughness by reducing hardness of the welded heat affected zone, the content of P is set to 0.010% or less. The lower the content of P is, the more the HAZ fracture toughness is enhanced. When further higher HAZ fracture toughness is required, it is preferable to set the content of P to 0.006% or less.

S: 0.0030% or less

S constitutes a MnS-based inclusion in steel in general, and deteriorates fracture toughness of the base material. Such tendency becomes conspicuous when the content of S exceeds 0.0030%. Accordingly, the content of S is set to 0.0030% or less. The content of S is preferably set to 0.0020% or less. Further, when the steel is required to exhibit the HIC resistance, the content of S is preferably set to 0.0010% or less.

Al: 0.06% or less

Al is added to the steel as a deoxidizer. The steel can acquire such an effect when the content of Al is 0.01% or more. However, when the content of Al exceeds 0.06%, cleanliness is lowered thus deteriorating ductility. Accordingly, the content of Al is set to 0.06% or less. The content of Al is more preferably set to a value which falls within a range of 0.010 to 0.040%.

Nb: 0.005 to 0.020%

Nb has an effect of enlarging an austenite no-recrystallization region at the time of hot rolling. Particularly, to enlarge the no-recrystallization region to 950°C, it is necessary to set the content of Nb added to 0.005% or more. On the other hand, when the amount of Nb to be added is increased, M-A constituents are formed in the microstructure of a high-heat-input welded heat affected zone, and precipitation brittleness is induced in the reheated welded affected zone at the time of multi-layered welding so that fracture toughness is remarkably deteriorated. Accordingly, an upper limit of the content of Nb is set to 0.020%. It is preferable that the amount of Nb to be added is as small as possible from a viewpoint of HAZ fracture toughness. The content of Nb added is more preferably set to a value which falls within a range of 0.005 to 0.010%.

Ti: 0.005 to 0.025%

Ti forms nitride and hence, Ti is effective for reducing an amount of solid solute N in steel. Precipitated TiN suppresses coarsening of austenite grains in a base material at the time of heating slab before hot rolling and in a welded heat affected zone at the time of high heat input welding by a pinning effect thus contributing to the enhancement of fracture toughness of the base material and the welded heat affected zone. To acquire such an effect, it is necessary to set the content of Ti to be added to 0.005% or more. However, when the content of Ti to be added exceeds 0.025%, fracture toughness of the base material and the HAZ is deteriorated due to precipitation of coarsened TiN and carbides and hence, an upper limit of the content of Ti added is set to 0.025%. The content of Ti to be added is more preferably set to a value which falls within a range of 0.005 to 0.020%.

N: 0.0010 to 0.0060%

Although N is usually present in steel as an unavoidable impurity, as described previously, due to the addition of Ti, N forms TiN which suppresses coarsening austenite and hence, the content of N is set. In steel, the presence of 0.0010% or more N is necessary to acquire a required pinning effect. However, when the content of N exceeds 0.0060%, the deterioration of fracture toughness of the base material and the welded heat affected zone due to the increase of solid solute N is conspicuous and hence, an upper limit of the content of N is set to 0.0060%. The content of N is more preferably set to a value which falls within a range of 0.0020 to 0.0050%.

C(%)-0.065Nb(%): 0.025 or more

The present invention aims at the enhancement of compressive strength of a steel pipe by reducing a Bauschinger effect through the suppression of the generation of back stress by making use of an interaction between solid solute C and dislocation and hence, it is important for the steel pipe to ensure effective solid solute C. In general, C in steel precipitates in the form of cementite or MA, and also is bonded with a carbide forming element such as Nb and precipitates in the form of carbide thus reducing an amount of solid solute C. Here, when the content of Nb is excessively large relative to the content of C, a precipitation amount of Nb carbide becomes large and hence, a sufficient amount of solid solute C cannot be obtained. However, when C(%)-0.065Nb(%) is 0.025 or more, a sufficient amount of solid solute C can be obtained. Accordingly, C(%)-0.065Nb(%) which is the relationship formula between the content of C and the content of Nb is set to 0.025 or more. C(%)-0.065Nb(%) is more preferably set to 0.028 or more.

C(%)-0.065Nb(%)-0.025Mo(%)-0.057V(%): 0.025 or more

Mo and V which are selective elements of the present invention are elements which form carbide in the same manner as Nb and hence, when these compositions are added, it is also necessary to add these compositions to the steel within ranges to an extent that a sufficient amount of solid solute C can be obtained. However, when a value of the relational formula expressed by C(%)-0.065Nb(%)-0.025Mo(%)-0.057V(%) is less than 0.025, an amount of solid solute C becomes short and hence, C(%)-0.065Nb(%)-0.025Mo(%)-0.057V(%) is set to 0.025 or more. C(%)-0.065Nb(%)-0.025Mo(%)-0.057V(%) is more preferably set to 0.028 or more. With respect to the element whose content is at an unavoidable impurity level (element not added), the calculation is made by setting the content of the element to 0%.

Ti(%)/N(%): 2 to 4

By setting Ti/N which is a ratio of an amount of Ti to an amount of N, to 4 or less, titanium nitride is finely dispersed and precipitates at the time of casting and hence, the grain growth of austenite can be totally suppressed in the welded heat affected zone. On the other hand, when Ti/N is less than 2, Ti becomes short relatively and hence, solid solute N adversely affects the fracture toughness. Accordingly, Ti/N is set to a value which falls within a range of 2 to 4. Ti/N is more preferably set to a value which falls within a range of 1.50 to 3.50.

In the present invention, in addition to the above-mentioned chemical compositions, the following elements can be arbitrarily added as selective elements, except of element Ca which is mandatory in the chemical composition.

Cu: 0.50% or less

Cu is an element effective for improving fracture toughness and for increasing strength. Such an effect can be acquired when the content of Cu added is 0.10% or more. However, when the content of Cu added exceeds 0.50%, weldability is deteriorated. Accordingly, when Cu is added to steel, the content of Cu added is set to 0.50% or less. The content of Cu added is more preferably set to 0.40% or less.

Ni: 1.0% or less

Ni is an element effective for improving fracture toughness and for increasing strength. Such effect can be acquired when the content of Ni added is 0.10% or more. However, when the content of Ni added exceeds 1.0%, fracture toughness of a weld is deteriorated thus accelerating the occurrence of cracks on a surface of a slab at the time of continuous casting. Accordingly, when Ni is added to the steel, the content of Ni added is set to 1.0% or less. The content of Ni added is more preferably set to 0.80% or less.

Cr: 0.50% or less

Cr is an element effective for increasing strength by increasing hardenability. Such effect can be acquired when the content of Cr is 0.10% or more. However, when the content of Cr added exceeds 0.50%, fracture toughness of the weld is deteriorated. Accordingly, when Cr is added to the steel, the content of Cr added is set to 0.50% or less. The content of Cr added is more preferably set to 0.30% or less.

Mo: 0.50% or less

Mo is an element effective for improving fracture toughness and for increasing strength. Such effect can be acquired when the content of Mo added is 0.05% or more. However, when the content of Mo added exceeds 0.50%, fracture toughness of the weld is deteriorated. Accordingly, when Mo is added to the steel, the content of Mo added is set to 0.50% or less. The content of Mo added is more preferably set to 0.30% or less.

V: 0.10% or less

V is an element which increases strength without deteriorating fracture toughness. Such effect can be acquired when the content of V added is 0.010% or more. However, when the content of V added exceeds 0.10%, in the same manner as Nb, V precipitates as carbide thus decreasing solid solute C. Accordingly, when V is added to the steel, the content of V added is set to 0.10% or less. The content of V added is more preferably set to 0.060% or less. The content of V added is further preferably set to 0.040% or less.

Ca: 0.0015 to 0.0035%

Ca is an element effective for enhancing ductility by controlling the shape of a sulfide-based inclusion. However, when the content of Ca added is less than 0.0005%, such an effect cannot be acquired. On the other hand, even when the content of Ca added exceeds 0.0035%, the effect is saturated and, rather, fracture toughness is deteriorated due to lowering of cleanliness. Accordingly, the content of Ca added is set to a value which falls within a range of 0.0015 to 0.0035%.

Ceq value: 0.30 or more

$$Ceq=C(\%)+Mn(\%)/6+\{Cr(\%)+Mo(\%)+V(\%)\}/5+\{Cu(\%)+Ni(\%)\}/15$$

Ceq is a hardenability index of steel. The higher the Ceq value is, the higher the tensile strength and the compressive strength of a steel material become. When the Ceq value is less than 0.30, a steel pipe having a heavy wall thickness exceeding 20mm cannot ensure sufficient strength and hence, the Ceq value is set to 0.30 or more. Further, to ensure sufficient strength with respect to a steel pipe having a heavy wall thickness exceeding 30mm, the Ceq value is desirably set to 0.36 or more. The higher the Ceq value is, the low-temperature crack sensitivity is increased thus promoting weld cracks. Accordingly, to allow welding of a steel material without preheating even under a severe environment such as an environment on a pipeline construction ship, an upper limit of the Ceq value is set to 0.42. With respect to the element whose content is at an unavoidable impurity level (element not added), the calculation is made by setting the content of the element to 0%.

A balance of steel of the present invention is substantially constituted of Fe, and the steel may contain other elements and unavoidable impurities than the above-mentioned elements provided that the other elements and impurities do not impair the advantageous effects of the present invention.

2. Metal microstructure

Reasons for limiting metal microstructure in the present invention are explained hereinafter. Hereinafter, all fractions of metal microstructure and MA mean area fractions. The metal microstructure of a steel plate can be specified in such a manner that a specimen is sampled from a position of 1/4 of a plate thickness on an inner surface side of a steel pipe, the specimen was etched using nital after polishing, and the metal microstructure was observed using an optical microscope. Then, using three to five photographs taken at magnification of 200 times, area fractions of bainite, ferrite, rolled ferrite and the like in the metal microstructure can be obtained by an image analysis. In general, there may be a case where the metal microstructure of a steel plate manufactured by applying accelerated cooling to the steel plate differs in the plate thickness direction of the steel plate. On the other hand, the collapse of a steel pipe which receives external pressure occurs due to a phenomenon that plastic deformation is generated first on an inner surface side of the steel pipe having the smaller circumference. Accordingly, with respect to the compressive strength, the property of the inner surface side of the steel pipe is important and hence, in general, compression test specimens are sampled from the inner surface side of the steel pipe. Accordingly, the above-mentioned metal microstructure defines the microstructure of the inner surface side of the steel pipe, and the microstructure at a position away from a surface of the innert surface side by 1/4 of a plate thickness is adopted as the microstructure at a position which represents the performance of the steel pipe.

Fraction of bainite: 80% or more

To acquire high compressive strength by suppressing a Bauschinger effect, it is necessary to form the metal microstructure into the uniform microstructure having a small amount of soft ferrite phase and a small amount of hard second phase thus suppressing the integration of local dislocation generated in the inside of the microstructure at the time of deformation. Accordingly, the metal microstructure is mainly formed of bainite. To acquire such an effect, it is necessary to set a fraction of bainite to 80% or more. Further, when higher compressive strength is required, it is desirable to set the fraction of bainite to 90% or more.

Fraction of M-A constituent (MA): 3% or less

M-A constituent (MA) is an extremely hard phase, and accelerates the integration of local dislocation at the time of deformation to bring about lowering of compressive strength caused by a Bauschinger effect. Thus, it is necessary to strictly limit a fraction of M-A constituent. However, when the fraction of MA is 3% or less, the influence exerted by M-A constituent is small and hence, lowering of compressive strength does not occur. Accordingly, the fraction of M-A constituent (MA) is set to 3% or less. A fraction of MA can be obtained in such a manner that, after etching the specimen using nital, electrolytic etching (two-step etching) is applied to the specimen and, thereafter, the microstructure is observed using a scanning electron microscope (SEM).

Fraction of cementite: 5% or less

In the steel plate manufactured by accelerated cooling, cementite which is formed at the time of air cooling after stopping accelerated cooling becomes a starting point of fracture and hence, cementite deteriorates fracture toughness of the base material, particularly DWTT property. In the present invention, to acquire the excellent DWTT property, the fraction of cementite in the base material is set to 5% or less.
Here, the fraction of cementite of a base material is a value which can be obtained by subtracting the fraction of MA obtained after electrolytic etching from a fraction of a second phase after etching using natal as described later.

Average grain size of bainite: 5$\mu$m or less

In a high-strength steel plate having a heavy wall thickness, it is difficult to completely suppress the formation of a hard phase such as MA. However, the formed MA and cementite can be finely dispersed by refining the bainite microstructure so that the integration of local dislocation at the time of deformation can be alleviated leading to the reduction of a Bauschinger effect. Further, a bainite boundary also becomes a location where the dislocation is integrated and hence, with the increase of an area of the grain boundary brought about by refining the microstructure, the integration of local dislocation in the grain boundary can be alleviated thus eventually enhancing the compressive strength by reducing a Bauschinger effect. Further, the fine microstructure is also effective for allowing a material having a heavy wall thickness to acquire sufficient base-material fracture toughness. Such effects can be acquired by setting the grain size of bainite to 5$\mu$m or less and hence, the average grain size of bainite is set to 5$\mu$m or less. The average grain size of bainite is more preferably set to 4.0$\mu$m or less.
According to the present invention, the steel plate has the above-mentioned features in metal microstructure and hence, lowering of compressive strength caused by a Bauschinger effect can be suppressed whereby the steel plate can acquire high compressive strength. To acquire a larger effect, it is desirable to make a size of MA fine. The smaller an average grain size of MA is, the more the local strain concentration is dispersed and hence, a strain concentration amount is also decreased whereby the generation of a Bauschinger effect can be further suppressed. Accordingly, an average grain size of MA is desirably set to 1$\mu$m or less.
To acquire high fracture toughness of a welded heat affected zone in the present invention, the microstructure of the welded heat affected zone of the seam weld is set as follows . Here, in general, a Charpy impact test specimen for evaluating fracture toughness of the welded heat affected zone is sampled from a coarse-grained HAZ (CGHAZ) in the vicinity of a fusion line of welding metal at a position of 1/2 of a plate thickness on an outer surface side of a steel pipe. Accordingly, the metal microstructure of the welded heat affected zone is the metal microstructure at a position corresponding to a bottom portion of a notch where an amount of welding metal and an amount of a base material (including the welded heat affected zone) becomes 1:1, which is a position representing the performance of the welded heat affected zone of the seam weld of the steel pipe. The metal microstructure of the welded heat affected zone can be specified in such a manner that a coarse-grained HAZ (CGHAZ) in the vicinity of a fusion line of outer-surface-side welding metal is etched with nital, and the metal microstructure was observed using an optical microscope. Area fractions of the respective metal microstructures can be obtained by an image analysis using three to five photographs taken at magnification of 200 times.

Fraction of bainite in welded heat affected zone: 90% or more

In general, to enhance fracture toughness of a welded heat affected zone, it is preferable to form soft ferrite finely. However, when the fraction of ferrite is excessively large, sufficient strength of joint cannot be obtained. Accordingly, in the present invention, the fraction of bainite in the welded heat affected zone is set to 90% or more.

Fraction of M-A constituent (MA) in welded heat affected zone: 3% or less

It is often the case that MA formed in the welded heat affected zone takes a needle-like shape, and becomes an initiation point of brittle fracture and hence, fracture toughness of the weld is remarkably deteriorated. However, when the fraction of MA in the welded heat affected zone is 3% or less, the influence exerted by MA is small and hence, the fraction of MA is set to 3% or less. Here, the fraction of MA can be obtained as area fraction in such a manner that, after etching the specimen using nital, electrolytic etching (two-step etching) is applied to the specimen and, thereafter, the microstructure is observed using a scanning electron microscope (SEM).

In acquiring the metal microstructure where the fraction of bainite in the HAZ is 90% or more and the fraction of M-A constituent (MA) in the HAZ is 3% or less, a welding method is not particularly limited. However, in the case of submerged arc welding, for example, the metal microstructure can be obtained by setting weld inputted heat to a range of 100kJ/cm or less.

3. Manufacturing conditions

According to the present invention, the third invention is directed to a manufacturing method where the steel slab containing the above-mentioned chemical composition is heated, is subjected to hot rolling and, thereafter, is subjected to accelerated cooling. Hereinafter, reasons for limiting manufacturing conditions of a steel plate are explained, where temperatures mean surface temperatures of steel plates unless otherwise specified.

Slab heating temperature: 950 to 1200°C

When a slab heating temperature is below 950°C, sufficient tensile strength and sufficient compressive strength cannot be acquired, while when the slab heating temperature exceeds 1200°C, fracture toughness and DWTT property are deteriorated. Accordingly, the slab heating temperature is set to a value which falls within a range of 950 to 1200°C. When further excellent DWTT property is required, an upper limit of the slab heating temperature is desirably set to 1100°C.

Rolling reduction rate in no-recrystallization temperature range: 60% or more

To acquire the fine bainite microstructure which can decrease a Bauschinger effect and high base-material fracture toughness, it is necessary to perform sufficient rolling reduction in a no-recrystallization temperature range in a hot rolling step. However, the effect is insufficient when a rolling reduction rate is less than 60% and hence, the rolling reduction rate in the no-recrystallization temperature range is set to 60% or more. The rolling reduction rate in the no-recrystallization temperature range is preferably set to 70% or more. Here, when rolling is performed through a plurality of rolling passes, a cumulative rolling reduction rate is used as the rolling reduction rate. Further, although the no-recrystallization temperature range changes depending on an alloy element such as Nb or Ti, with the addition amounts of Nb and Ti according to the present invention, the no-recrystallization temperature range may be set to 950°C or below.

Rolling completion temperature: $Ar_3$ to ($Ar_3$+70°C)

To suppress lowering of strength caused by a Bauschinger effect, it is necessary to form the metal microstructure into the microstructure which is mainly constituted of bainite and to suppress the formation of soft microstructure such as ferrite. Accordingly, it is necessary to perform hot rolling above an $Ar_3$ temperature which is a ferrite forming temperature . Further, it is preferable to set a rolling completion temperature as low as possible for acquiring the finer bainite structure, while when the rolling completion temperature is excessively high, a grain size of bainite becomes excessively large. Accordingly, an upper limit of the rolling completion temperature is set to ($Ar_3$+70°C).

The $Ar_3$ temperature changes depending on alloy components of steel and hence, the transformation temperature may be obtained by measurement by carrying out an experiment on respective steels. However, the transformation temperature may be also obtained based on contents using the following formula (1).

$$Ar_3(°C)=910-310C(\%)-80Mn(\%)-20Cu(\%)-15Cr(\%)-55Ni(\%)-80Mo(\%)$$

$$\dots (1)$$

With respect to an element whose content is at an unavoidable impurity level (element not added), the calculation is made by setting the content of the element to 0%.

Accelerated cooling is performed following hot rolling. Conditions of accelerated cooling are as follows.

Cooling start temperature: $(Ar_3-30°C)$ or above

Although the metal microstructure is formed into the microstructure mainly constituted of bainite by performing accelerated cooling after hot rolling, when a cooling start temperature becomes below an Ar3 temperature which is a ferrite forming temperature, the metal microstructure becomes the mixed microstructure of ferrite and bainite and hence, lowering of strength caused by a Bauschinger effect is large whereby compressive strength is lowered. However, when the accelerated cooling start temperature is $(Ar_3-30°C)$ or above, a fraction of ferrite is low so that lowering of strength caused by a Bauschinger effect is also small. Accordingly, the cooling start temperature is set to $(Ar_3-30°C)$ or above.

Cooling rate: 10°C/sec or more

Accelerated cooling is a process indispensable for the acquisition of a steel plate having high strength and high fracture toughness, wherein by cooling the steel plate at a high cooling rate, the steel plate can acquire a strength increasing effect due to transformation strengthening. However, when the cooling rate is less than 10°C/sec, not only the steel plate cannot acquire sufficient tensile strength and sufficient compressive strength but also the concentration of C occurs in non-transformed austenite due to the occurrence of diffusion of C and hence, a formation amount of MA becomes large. Since a Bauschinger effect is accelerated due to a hard second phase such as MA as described previously, lowering of compressive strength is brought. However, when the cooling rate is 10°C/sec or more, the diffusion of C during cooling can be decreased so that the formation of MA can be also suppressed. Accordingly, a lower limit of the cooling rate at the time of accelerated cooling is set to 10°C/sec.

Cooling stop temperature: more than 300°C to 420°C

The bainite transformation progresses by accelerated cooling so that the steel plate can acquire required tensile strength and compressive strength. However, when a temperature at the time of stopping cooling exceeds 420°C, the bainite transformation is insufficient so that the steel plate cannot acquire sufficient tensile strength and compressive strength. Further, the bainite transformation is not completed and hence, the concentration of C occurs in the non-transformed austenite during air cooling after stopping cooling so that the formation of cementite or MA is accelerated. On the other hand, when a steel plate average temperature at the time of stopping cooling is 300°C or below, a temperature of a steel plate surface layer portion is lowered to a martensite transformation temperature or below and hence, a MA fraction of the surface layer portion is increased whereby compressive strength is lowered by a Bauschinger effect. Further, hardness of the surface layer portion is increased and strain is liable to be generated in the steel plate and hence, formability is deteriorated whereby when the steel plate is formed into a pipe, roundness of the pipe is remarkably deteriorated. Accordingly, the temperature at the time of stopping cooling is set to a value which falls within a range of more than 300°C to 420°C.

According to the present invention, the fourth invention is characterized by applying reheating treatment to the steel plate after accelerated cooling. Reasons for limiting the reheating conditions are explained hereinafter.

Steel plate surface temperature: 500 to 700°C

In accelerated cooling of a steel plate having a heavy wall thickness, a cooling rate is fast in a steel plate surface layer portion, and the surface layer portion is cooled to a temperature lower than a temperature of the inner portion of the steel plate. Accordingly, MA (M-A constituent) is liable to be formed in the steel plate surface layer portion. Such a hard phase accelerates a Bauschinger effect. Lowering of compressive strength caused by a Bauschinger effect can be suppressed by decomposing MA by heating the surface layer portion of the steel plate after accelerated cooling. However, the decomposition of MA is not sufficient when the surface temperature is less than 500°C, while when the surface temperature exceeds 700°C, a heating temperature at a center portion of the steel plate is also elevated thus bringing about large lowering of strength. Accordingly, when reheating is performed aiming at the decomposition of MA after accelerated cooling, the steel plate surface temperature at the time of reheating is set to a value which falls within a range of 500 to 700°C. The measurement of steel plate surface temperatures is carried out using a known thermometer in accordance with a normal method.

Steel plate center temperature: below 550°C

Due to reheating after accelerated cooling, MA in the surface layer portion is decomposed so that the steel plate can acquire high compressive strength. However, when a heating temperature of the steel plate center portion becomes 550°C or above, a phenomenon that cementite coagulates and becomes coarse occurs and hence, DWTT property is deteriorated, and also compressive strength is lowered due to lowering of solid solute C. Accordingly, the steel plate center temperature during reheating after accelerated cooling is set to a temperature below 550°C.

Here, a steel plate center temperature at the time of reheating can be obtained by performing heat transfer calculation based on measured values of surface temperatures. However, the temperature difference between a surface layer portion and a central portion becomes small immediately after heating and hence, a surface temperature in such case may be used as the steel plate center temperature.

As a means for reheating the steel plate after accelerated cooling, it is desirable to use induction heating which can effectively heat only a surface layer portion where a large amount of MA is present. Further, to acquire an effect brought about by reheating, it is effective to heat the steel plate to a temperature higher than a temperature at the time of stopping cooling and hence, the steel plate center temperature at the time of reheating is preferably set to a temperature higher than a temperature at the time of stopping cooling by 50°C or more.

According to the fourth invention of the present invention, a steel pipe is manufactured using a steel plate which is manufactured by reheating the steel plate such that a steel plate surface temperature falls within a range of 550 to 720°C and a steel plate center temperature becomes below 550°C. Accordingly, the steel pipe can acquire the higher compressive strength compared to the third invention.

According to the present invention, a steel pipe is made using the steel plate manufactured by the above-mentioned method. With respect to a steel pipe forming method, the steel plate is formed into a steel pipe shape by cold forming such as a UOE process or press bend. Thereafter, seam welding is applied to the steel pipe shape. As a welding method used here, any welding method can be adopted provided that sufficient strength of joint and sufficient toughness of joint can be obtained. However, from viewpoints of excellent weld quality and excellent production efficiency, it is preferable to use submerged arc welding.

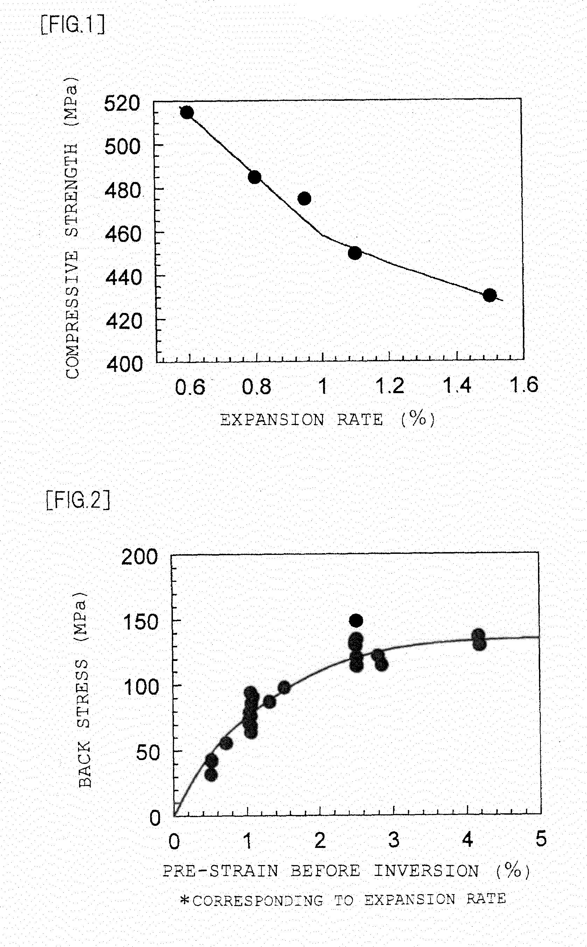

After finishing welding of a seam or a butt portion of the steel pipe shape, the pipe expansion is performed for eliminating weld residual stress and for enhancing roundness of the steel pipe. In this pipe expansion, it is necessary to set an expansion rate to 0.4% or more as a condition for acquiring the steel pipe having predetermined roundness and for eliminating residual stress from the steel pipe. Further, when the expansion rate is excessively high, lowering of compressive strength caused by a Bauschinger effect is serios and hence, an upper limit of the expansion rate is set to 1.2%. Further, in the usual manufacture of a welded steel pipe, in general, an expansion rate is controlled to a value which falls within a range of 0.90 to 1.20% by focusing on securing roundness. On the other hand, from a view point of securing compressive strength, it is desirable that the expansion rate is low. Fig. 1 is a view showing compressive strength when the expansion rate was changed in No. 7 (kind of steel D) shown in Table 2 and Table 3. As shown in Fig. 1, a remarkable compressive-strength improving effect is observed by setting the expansion rate to 0.9% or less and hence, the expansion rate is more preferably set to a value which falls within a range of 0.4 to 0.9%. The expansion rate is further preferably set to a value which falls within a range of 0.5 to 0.8%. The reason why the remarkable compressive-strength improving effect is observed by setting the expansion rate to 0.9% or less is that, as shown in Fig. 2, in the generation behavior of back stress in a steel material, the back stress is remarkably increased in a low strain region and, thereafter, the degree of increase of the back stress becomes small from approximately 1% and the back stress is saturated at 2.5% or more. Fig. 2 is a view showing the relationship between pre-strain before inversion and back stress, the pre-strain corresponding to an expansion rate which is obtained by repeatedly applying a load to round bar tensile specimens cut out from a steel plate having a heavy wall thickness which has substantially same chemical compositions and is manufactured by a substantially same method as the steel plate of No. 9 (kind of steel E) in Table 2.

[Embodiment]

Slabs are manufactured from steels (kinds of steels A to M) having chemical compositions shown in Table 1 by a continuous casting process, and heavy-wall-thickness steel plates (No. 1 to 27) having plate thicknesses of 25 mm to 33 mm were manufactured using the slabs. Manufacturing conditions of the steel plates are shown in Table 2-1 and 2-2. In reheating treatment at the time of manufacturing the steel plate, reheating was performed using an induction heating furnace which is mounted on the same line as an accelerated cooling facility. A surface layer temperature at the time of reheating is a surface temperature of the steel plate at an exit of the induction heating furnace, and a steel plate temperature at a point of time that a surface layer temperature and a center temperature become substantially equal to each other after heating is set as the center temperature. Using these steel plates, steel pipes having an outer diameter of 762mm or 914mm were manufactured by a UOE process . Seam welding is performed in such a manner that 4-electrode submerged arc welding of single pass is carried out on inner and outer surfaces of the steel pipe, and inputted heat at the time of welding is set to a value which falls within a range of 20 to 80kJ/cm corresponding to a plate thickness of the steel plate. An expansion rate at the time of manufacturing steel pipes is also shown in Table 2-1 and 2-2.

With respect to tensile property of the steel pipe manufactured as described above, a tensile test was carried out using a whole thickness specimen in the pipe circumferential direction as a tensile specimen, and tensile strength of the specimen was measured. In a compression test, a specimen having a diameter of 20mm and a length of 60mm was sampled from the steel pipe in the pipe circumferential direction at a position on an inner surface side of the steel pipe, and the compression test was carried out so as to measure compressive yield strength (or 0.5% proof strength). Further, using a DWTT specimen sampled from the steel pipe in the pipe circumferential direction, a temperature at which a shear area becomes 85% was determined as 85%SATT (Shear Area Transition Temperature). Fracture toughness of the welded heat affected zone of the seam weld was evaluated by a Charpy impact test. Absorption energy was measured at a test temperature of -30°C with respect to three specimens for each joint, and an average value and a lowermost value of the absorption energy were obtained. A notched position was set to a position where a fusion line is at the center of a bottom of a notch formed in the Charpy specimen, and a ration between an amount of welding metal and an amount of base material (including welded heat affected zone) becomes 1:1 at the bottom of the notch. With respect to the metal microstructure, a sample was sampled from a position of 1/4 of a plate thickness on an inner surface side of the steel pipe, the sample was etched using nital after polishing, and the metal microstructure was observed using an optical microscope. Then, using five photographs taken at magnification of 200 times, a fraction of bainite was obtained by an image analysis. An average grain size of bainite was obtained by a line analysis using the same microscope photographs. The observation of cementite and MA was carried out in such a manner that using the above-mentioned specimens whose fractions of bainite are already obtained, firstly, the observation of the microstructure was carried out using a scanning electron microscope (SEM) in a state where the sample was etched with nital. Then, using five photographs taken at magnification of 1000 times, an area fraction of a hard second phase other than bainite and ferrite was obtained. In this case, the hard second phase contains cementite and MA. Thereafter, electrolytic etching (two-step etching) was applied to the same sample and, again, the observation of the microstructure using the scanning electron microscope was carried out. Then, in the same manner, an area fraction of the second phase was obtained by an image analysis using five photographs taken at magnification of 1000 times. The fraction of the second phase after electrolytic etching (two-step etching) was set as the area fraction of MA, and a value which is obtained by subtracting the fraction of MA obtained after electrolytic etching from the fraction of the second phase after etching with natal was set as the area fraction of cementite.

Further, with respect to the metal microstructure of the welded heat affected zone, using a sample of the coarse-grained HAZ in the vicinity of a fusion line of external-surface side welding metal where a notch is introduced in the Charpy impact test, firstly, the metal microstructure was observed using an optical microscope after etching the sample with nital, and the fraction of bainite was obtained by an image analysis using five photographs taken at magnification of 200 times. Thereafter, electrolytic etching (two-step etching) was applied to the same sample and, again, the observation of the metal microstructure was carried out using a scanning electron microscope (SEM, an area fraction of MA being obtained by an image analysis using five photographs taken at magnification of 1000 times. These results are shown in Table 3.

As shown in Table 3-1, in all of Nos. 1 to 11 which are the present invention examples, the chemical composition, the manufacturing method and the microstructure were within the scope of the present invention. Nos. 1 to 11 exhibited high compressive strength of 430 MPa or more and favorable DWTT property (-20°C or below). Further, tensile strength of joint is 620MPa or more, and fracture toughness of HAZ also acquires extremely high absorption energy (100J or more).

On the other hand, as shown in Table 3-2, in Nos. 12 to 20, although the chemical composition was within the scope of the present invention, the manufacturing method was outside the scope of the present invention and hence, Nos. 12 to 20 are inferior to the present invention example with respect to any one of tensile strength, compressive strength, DWTT property, tensile strength of joint and HAZ fracture toughness. As shown in Table 3-2, in Nos. 21 to 27, the chemical compositions fall outside the scope of the present invention and hence, Nos. 21 to 27 were inferior to the present invention examples also with respect to any one of tensile strength, compressive strength, DWTT property, strength of joint and HAZ fracture toughness.

[Industrial Applicability]

According to the present invention, it is possible to acquire a steel pipe having a heavy wall thickness which has high compressive strength, excellent DWTT property, excellent tensile strength of joint at the seam weld and the excellent HAZ fracture toughness and hence, the steel pipe is applicable to a linepipe for deep-sea which is required to exhibit high collapse resistant performance and, particularly to a linepipe which is required to exhibit low-temperature fracture toughness.

[Table 1]

Table 1

| Kind of steel | Chemical composition (mass%) | | | | | | | | | | | | | | | C* | Ti/N | Ceq | Ar₃ (°C) | Remarks |
|---|---|---|---|---|---|---|---|---|---|---|---|---|---|---|---|---|---|---|---|---|
| | C | Si | Mn | P | S | Al | Nb | Ti | Mo | Ni | Cr | Cu | V | Ca | N | | | | | |
| A | 0.063 | 0.03 | 1.85 | 0.005 | 0.0018 | 0.030 | 0.018 | 0.012 | - | - | - | - | - | - | 0.0035 | 0.062 | 3.43 | 0.37 | 742 | Present invention example |
| B | 0.072 | 0.07 | 1.67 | 0.006 | 0.0014 | 0.025 | 0.012 | 0.010 | 0.10 | 0.09 | - | - | - | 0.0023 | 0.0042 | 0.069 | 2.38 | 0.38 | 741 | |
| C | 0.069 | 0.02 | 1.63 | 0.008 | 0.0012 | 0.030 | 0.010 | 0.010 | 0.09 | 0.67 | - | 0.14 | - | 0.0021 | 0.0035 | 0.066 | 2.86 | 0.41 | 711 | |
| D | 0.067 | 0.04 | 1.65 | 0.005 | 0.0014 | 0.024 | 0.013 | 0.009 | 0.14 | 0.22 | 0.20 | - | - | 0.0018 | 0.0028 | 0.063 | 3.21 | 0.42 | 731 | |
| E | 0.039 | 0.08 | 1.35 | 0.003 | 0.0006 | 0.036 | 0.015 | 0.012 | 0.22 | 0.18 | - | - | 0.038 | 0.0022 | 0.0045 | 0.030 | 2.67 | 0.33 | 762 | |
| F | 0.055 | 0.07 | 1.74 | 0.007 | 0.0022 | 0.028 | 0.015 | 0.009 | - | 0.32 | 0.18 | 0.21 | 0.035 | - | 0.0032 | 0.052 | 2.81 | 0.42 | 729 | |
| G | 0.064 | <u>0.32</u> | 1.65 | 0.010 | 0.0018 | 0.028 | 0.019 | 0.011 | 0.18 | 0.10 | - | - | 0.042 | - | 0.0043 | 0.056 | 2.56 | 0.39 | 738 | Comparison example |
| H | <u>0.093</u> | 0.08 | 1.54 | 0.008 | 0.0020 | 0.033 | 0.012 | 0.008 | 0.11 | - | - | - | - | - | 0.0035 | 0.089 | 2.29 | 0.37 | 749 | |
| I | 0.058 | 0.03 | 1.72 | <u>0.013</u> | 0.0018 | 0.034 | 0.016 | 0.009 | 0.14 | 0.22 | - | 0.12 | - | 0.0018 | 0.0031 | 0.053 | 2.90 | 0.40 | 729 | |
| J | 0.065 | 0.06 | 1.58 | 0.012 | 0.0018 | 0.034 | <u>0.032</u> | 0.009 | 0.18 | - | 0.13 | - | - | - | 0.0033 | 0.058 | 2.73 | 0.39 | 747 | |
| K | 0.062 | 0.04 | 1.63 | 0.006 | 0.0012 | 0.026 | 0.015 | 0.007 | 0.14 | 0.22 | 0.20 | - | - | - | 0.0046 | 0.058 | <u>1.52</u> | 0.42 | 734 | |
| L | 0.033 | 0.06 | 1.65 | 0.005 | 0.0015 | 0.033 | 0.019 | 0.010 | 0.22 | - | - | - | 0.065 | 0.0023 | 0.0035 | <u>0.023</u> | 2.86 | 0.37 | 750 | |
| M | 0.043 | 0.08 | 1.26 | 0.004 | 0.0011 | 0.033 | 0.018 | 0.012 | 0.08 | - | - | - | 0.033 | - | 0.0040 | 0.038 | 3.00 | <u>0.28</u> | 789 | |

Underlined parts: values outside the scope of the present invention

C*=C(%)-0.065Nb(%)-0.025Mo(%)-0.057V(%)    [Respective element symbols indicate contents (mass%)]

Ceq=C+Mn/6+(Cu+Ni)/15+(Cr+Mo+V)/5 [Respective element symbols indicate contents (mass%)]

Ar₃(°C)=910-310C(%)-80Mn(%)-20Cu(%)-15Cr(%)-55Ni(%)-80Mo(%)    [Respective element symbols indicate contents (mass%)]

[Table 2-1]

Table 2-1

| No. | Kind of steel | Steel pipe size | | Steel plate manufacturing condition | | | | | | | | | | | Expansion rate | Remarks |
| | | Outer diameter (mm) | Wall thickness (mm) | Slab heating temperature (°C) | Rolling reduction in no-recrystallization temperature range (%) | Rolling completion temperature (°C) | Rolling completion temperature -Ar$_3$ (°C) | Accelerated cooling start temperature (°C) | Accelerated cooling start temperature -Ar$_3$ (°C) | Accelerated cooling stop temperature (°C) | Cooling rate (°C/sec) | Reheating temperature (°C) | | | |
| | | | | | | | | | | | | Surface layer | Center | | |
| 1 | A | 762 | 25 | 1080 | 75 | 760 | 18 | 732 | -10 | 380 | 40 | 600 | 475 | 0.8 | |
| 2 | B | 762 | 25 | 1080 | 75 | 795 | 54 | 765 | 24 | 370 | 38 | 620 | 488 | 1.0 | |
| 3 | C | 914 | 30 | 1100 | 75 | 730 | 19 | 705 | -6 | 400 | 32 | 600 | 460 | 0.8 | |
| 4 | D | 914 | 30 | 1070 | 75 | 755 | 24 | 735 | 4 | 390 | 30 | 580 | 453 | 1.0 | Present invention example |
| 5 | D | 914 | 30 | 1050 | 60 | 740 | 9 | 714 | -17 | 350 | 28 | 645 | 516 | 0.8 | |
| 6 | D | 914 | 30 | 1050 | 60 | 760 | 29 | 735 | 4 | 350 | 33 | 550 | 428 | 0.8 | |
| 7 | D | 914 | 30 | 1090 | 75 | 762 | 31 | 745 | 14 | 400 | 38 | 630 | 485 | 0.6 | |
| 8 | D | 914 | 30 | 1090 | 75 | 762 | 31 | 745 | 14 | 400 | 38 | 630 | 485 | 0.95 | |
| 9 | E | 762 | 33 | 1080 | 75 | 772 | 10 | 758 | -4 | 350 | 22 | 650 | 495 | 1.0 | |
| 10 | E | 762 | 33 | 1050 | 75 | 778 | 16 | 765 | 3 | 410 | 20 | - | - | 1.0 | |
| 11 | F | 762 | 33 | 1050 | 65 | 740 | 11 | 726 | -3 | 400 | 20 | 610 | 460 | 1.0 | |

16

EP 2 505 681 B1

[Table 2-2]

Table 2-2

EP 2 505 681 B1

| No. | Kind of steel | Steel pipe size | | Steel plate manufacturing condition | | | | | | | | | Reheating temperature (°C) | | Expansion rate | Remarks |
|---|---|---|---|---|---|---|---|---|---|---|---|---|---|---|---|---|
| | | Outer diameter (mm) | Wall thickness (mm) | Slab heating temperature (°C) | Rolling reduction in no-recrystallization temperature range (%) | Rolling completion temperature (°C) | Rolling completion temperature -Ar$_3$ (°C) | Accelerated cooling start temperature (°C) | Accelerated cooling start temperature -Ar$_3$ (°C) | Accelerated cooling stop temperature (°C) | Cooling rate (°C/sec) | Surface layer | Center | | |
| 12 | A | 762 | 25 | 1060 | 75 | 762 | 20 | 730 | -12 | 360 | <u>8.2</u> | - | - | 1.0 | Comparison example |
| 13 | A | 762 | 25 | 1080 | 75 | 761 | 19 | 733 | -9 | 320 | 42 | <u>460</u> | 340 | 1.0 | |
| 14 | A | 762 | 25 | 1100 | 75 | 765 | 23 | 742 | 0 | 320 | 42 | 620 | <u>610</u> | 1.0 | |
| 15 | D | 914 | 30 | 1090 | 75 | 736 | 5 | 695 | <u>-36</u> | 380 | 30 | - | - | 1.0 | |
| 16 | D | 914 | 30 | 1080 | 75 | 719 | <u>-12</u> | 709 | -22 | 360 | 28 | - | - | 1.0 | |
| 17 | D | 914 | 30 | 1100 | 75 | 740 | 9 | 725 | -6 | <u>220</u> | 32 | 650 | 505 | 0.9 | |
| 18 | D | 914 | 30 | 1100 | 75 | 760 | 29 | 745 | 14 | <u>480</u> | 32 | 630 | 495 | 0.9 | |
| 19 | D | 914 | 30 | 1090 | 75 | 762 | 31 | 745 | 14 | 400 | 38 | 630 | 485 | <u>1.5</u> | |
| 20 | D | 914 | 30 | 1080 | <u>50</u> | 750 | 19 | 725 | -6 | 400 | 32 | 620 | 485 | 0.9 | |
| 21 | G | 914 | 30 | 1060 | 75 | 762 | 24 | 742 | 4 | 380 | 25 | 580 | 445 | 1.0 | |
| 22 | <u>H</u> | 914 | 30 | 1080 | 75 | 765 | 16 | 738 | -11 | 360 | 27 | 600 | 460 | 1.0 | |
| 23 | <u>I</u> | 914 | 30 | 1100 | 75 | 748 | 19 | 722 | -7 | 400 | 26 | 550 | 405 | 1.0 | |
| 24 | J | 914 | 30 | 1060 | 75 | 765 | 18 | 750 | 3 | 400 | 26 | 570 | 420 | 1.0 | |
| 25 | <u>K</u> | 762 | 33 | 1070 | 75 | 758 | 24 | 742 | 8 | 380 | 32 | 580 | 450 | 1.0 | |
| 26 | L | 762 | 25 | 1060 | 75 | 760 | 10 | 745 | -5 | 380 | 40 | - | - | 1.0 | |
| 27 | M | 762 | 25 | 1090 | 75 | 812 | 23 | 775 | -14 | 360 | 38 | - | - | 1.0 | |

Underlined parts indicate values outside the scope of the present invention.

18

[Table 3-1]

[Table 3-1]

Table 3-1

| No. | Metal microstructure of base material | | | | Metal microstructure of welded heat affected zone | | Mechanical property of steel pipe | | | | | Remarks |
|---|---|---|---|---|---|---|---|---|---|---|---|---|
| | Bainite fraction (%) | MA fraction (%) | Cementite fraction (%) | Average grain size of bainite (μm) | Bainite fraction (%) | MA fraction (%) | Tensile strength (MPa) | Compressive yield strength (Mpa) | DWTT property 85% SATT (°C) | Tensile strength of joint (Mpa) | HAZ fracture toughness vE-30°C (J) | |
| 1 | 87 | 1.4 | 2.6 | 4.2 | 96 | 1.4 | 598 | 473 | -28 | 625 | 151 | Present invention example |
| 2 | 93 | 1.8 | 4.2 | 3.1 | 97 | 1.2 | 625 | 496 | -33 | 663 | 138 | |
| 3 | 88 | 1.6 | 3.0 | 3.6 | 98 | 1.6 | 645 | 525 | -32 | 660 | 95 | |
| 4 | 94 | 2.2 | 2.8 | 4.6 | 97 | 2.1 | 653 | 519 | -28 | 682 | 182 | |
| 5 | 81 | 0.8 | 4.4 | 3.2 | 94 | 2.3 | 624 | 510 | -36 | 650 | 176 | |
| 6 | 84 | 2.0 | 3.4 | 3.9 | 96 | 1.8 | 648 | 516 | -30 | 655 | 146 | |
| 7 | 95 | 1.6 | 2.6 | 3.1 | 98 | 1.1 | 608 | 515 | -36 | 645 | 160 | |
| 8 | 95 | 1.6 | 2.6 | 3.1 | 98 | 1.3 | 610 | 475 | -34 | 645 | 154 | |
| 9 | 90 | 0.6 | 3.8 | 3.1 | 93 | 1.2 | 576 | 463 | -37 | 620 | 185 | |
| 10 | 95 | 2.6 | 1.9 | 3.6 | 92 | 0.8 | 587 | 477 | -42 | 631 | 158 | |
| 11 | 91 | 1.5 | 2.6 | 3.7 | 97 | 2.1 | 620 | 506 | -36 | 644 | 88 | |

Underlined parts indicate values outside the scope of the present invention.
Fraction (%) means area fraction.

EP 2 505 681 B1

[Table 3-2]

Table 3-2

| No. | Metal microstructure of base material | | | | Metal microstructure of welded heat affected zone | | Mechanical property of steel pipe | | | | | Remarks |
|---|---|---|---|---|---|---|---|---|---|---|---|---|
| | Bainite fraction (%) | MA fraction (%) | Cementite fraction (%) | Average grain size of bainite (μm) | Bainite fraction (%) | MA fraction (%) | Tensile strength (MPa) | Compressive yield strength (Mpa) | DWTT property 85% SATT (°C) | Tensile strength of joint (Mpa) | HAZ fracture toughness vE-30°C (J) | |
| 12 | 86 | 4.3 | 2.4 | 4.8 | 97 | 1.6 | 546 | 405 | -25 | 583 | 163 | Comparison example |
| 13 | 87 | 2.8 | 2.3 | 4.1 | 98 | 1.2 | 611 | 432 | -35 | 660 | 142 | |
| 14 | 85 | 0.3 | 6.3 | 4.8 | 96 | 2.1 | 542 | 388 | -8 | 602 | 155 | |
| 15 | 65 | 4.2 | 2.3 | 3.2 | 98 | 1.6 | 586 | 430 | -34 | 623 | 165 | |
| 16 | 81 | 2.8 | 3.5 | 4.6 | 98 | 1.4 | 614 | 425 | -38 | 635 | 148 | |
| 17 | 92 | 4.8 | 1.3 | 3.5 | 97 | 2.0 | 618 | 432 | -28 | 658 | 165 | |
| 18 | 91 | 2.6 | 5.8 | 4.2 | 97 | 1.6 | 596 | 413 | -18 | 639 | 153 | |
| 19 | 95 | 1.6 | 2.6 | 3.1 | 98 | 1.2 | 612 | 430 | -32 | 650 | 142 | |
| 20 | 85 | 1.5 | 3.5 | 3.8 | 97 | 2.1 | 637 | 513 | -3 | 676 | 168 | |
| 21 | 93 | 2.1 | 3.8 | 3.6 | 94 | 4.8 | 635 | 503 | -32 | 658 | 48 | |
| 22 | 86 | 4.6 | 2.3 | 3.2 | 92 | 5.2 | 612 | 435 | -42 | 660 | 38 | |
| 23 | 91 | 2.2 | 4.3 | 3.8 | 97 | 1.5 | 631 | 480 | -33 | 691 | 66 | |
| 24 | 94 | 2.3 | 3.0 | 3.2 | 95 | 3.8 | 622 | 465 | -42 | 663 | 45 | |
| 25 | 97 | 0.8 | 0.0 | 3.6 | 97 | 1.3 | 623 | 475 | -35 | 668 | 71 | |
| 26 | 90 | 2.3 | 3.0 | 3.7 | 98 | 0.8 | 630 | 428 | -32 | 678 | 143 | |
| 27 | 82 | 0.6 | 1.6 | 4.6 | 85 | 1.6 | 548 | 385 | -30 | 503 | 225 | |

Underlined parts indicate values outside the scope of the present invention.
Fraction (%) means area fraction.

**Claims**

1. A welded steel pipe for a linepipe having the composition consisting of, by mass% 0.03 to 0.08% C, 0.05% or less Si, 1.00 to 2.00% Mn, 0.010% or less P, 0.0030% or less S, 0.06% or less Al, 0.005 to 0.020% Nb, 0.005 to 0.025% Ti, 0.0010 to 0.0060% N, 0.0015 to 0.0035% Ca, optionally at least one selected from the group consisting of 0.50% or less Cu, 1.0% or less Ni, 0.50% or less Cr, 0.50% or less Mo and 0.10% or less V, and Fe and unavoidable impurities as a balance, wherein

   C(%) - 0.065Nb(%) is 0.025 or more,
   Ti(%)/N(%) is a value which falls within a range of 2 to 4, and
   a Ceq value expressed by a following formula is 0.30 or more,

   $$Ceq=C(\%)+Mn(\%)/6+\{Cr(\%)+Mo(\%)+V(\%)\}/5+\{Cu(\%)+Ni(\%)\}/15$$

   a base material having metal microstructure at a position 1/4 of a plate thickness on an inner surface side of the steel pipe where a fraction of bainite is 80% or more, a fraction of M-A constituent (MA) is 3% or less, a fraction of cementite is 5% or less, and an average grain size of bainite is 5 $\mu$m or less, an average grain size of MA is 1 $\mu$m or less and
   a welded heat affected zone having metal microstructure where a fraction of bainite is 90% or more and a fraction of M-A constituent (MA) is 3% or less.

2. The welded steel pipe for a linepipe according to claim 1, wherein the composition further contains by mass% one or two kinds or more selected from a group consisting of 0.50% or less Cu, 1.0% or less Ni, 0.50% or less Cr, 0.50% or less Mo, and 0.10% or less V, and C(%) - 0.065Nb(%) - 0.025Mo(%) - 0.057V(%) is 0.025 or more.

3. A method of manufacturing a welded steel pipe for a linepipe, wherein steel having the composition described in claim 1 or 2 is heated to a temperature which falls within a range of 950 to 1200°C, is hot-rolled to a steel plate where a rolling reduction rate in a no-recrystallization temperature range is set to 60% or more and a rolling completion temperature falls within a range of Ar$_3$ to (Ar$_3$+70°C), and subsequently, the steel plate is subjected to accelerated cooling at a cooling rate of 10°C/sec or more from a temperature of (Ar$_3$-30°C) or above to a temperature which falls within a range of more than 300°C to 420°C and the steel plate is formed into a steel pipe shape by cold forming, then seam welding by performing submerged arc welding, the heat input being 100kJ/cm or less, is applied to a butt portion of the steel pipe shape to form a steel pipe, and the steel pipe is subjected to pipe expansion with an expansion rate of 0.4% to 1.2%.

4. The method of manufacturing a welded steel pipe for a linepipe according to claim 3, wherein the steel plate is subjected to reheating succeeding the accelerated cooling such that a steel plate surface temperature falls within a range of 500 to 700°C and a steel plate center temperature becomes below 550°C.

**Patentansprüche**

1. Geschweißtes Stahlrohr für ein Leitungsrohr, das die Zusammensetzung hat, die in Masse-% besteht aus:

   0,03 bis 0,08% C, 0,05 % oder weniger Si, 1,00 bis 2,00 % Mn, 0,010 % oder weniger P, 0,0030 % oder weniger S, 0,06 % oder weniger Al, 0,005 bis 0,020 % Nb, 0,005 bis 0,025 % Ti, 0,0010 bis 0,0060 % N, 0,0015 bis 0,0035 % Ca, wahlweise wenigstens einem Bestandteil, der aus der Gruppe ausgewählt wird, die aus 0,50 % oder weniger Cu, 1,0 % oder weniger Ni, 0,50 % oder weniger Cr, 0,50 % oder weniger Mo sowie 0,10 % oder weniger V, und Fe sowie unvermeidbaren Verunreinigungen als einem Rest, wobei C(%) - 0,065Nb(%) 0,025 oder mehr beträgt,
   Ti(%)/N(%) ein Wert ist, der in einem Bereich von 2 bis 4 liegt, und
   ein durch die folgende Formel ausgedrückter Ceq-Wert 0,30 oder mehr beträgt,

   $$Ceq = C(\%) + Mn(\%)/6 + \{Cr(\%) + Mo(\%) + V(\%)\}/5 + \{Cu(\%) + Ni(\%)\}/15,$$

   ein Basismaterial Metall-Mikrogefüge an einer Position von 1/4 einer Plattendicke an einer Seite der Innenfläche des Stahlrohrs hat, in dem ein Anteil an Bainit 80 % oder mehr beträgt, ein Anteil an einer M-A-Komponente (MA) 3 % oder weniger beträgt, ein Anteil an Zementit 5 % oder weniger beträgt und eine durchschnittliche Komgröße von Bainit 5 $\mu$m oder weniger beträgt,

eine durchschnittliche Korngröße von MA 1 $\mu$m oder weniger beträgt und

eine Schweißhitze-Einflusszone Metall-Mikrogefüge hat, in dem ein Anteil an Bainit 90 % oder mehr beträgt und ein Anteil an einer M-A-Komponente (MA) 3 % oder weniger beträgt.

2. Geschweißtes Stahlrohr für ein Leitungsrohr nach Anspruch 1, wobei die Zusammensetzung des Weiteren in Masse-% eine oder zwei Verbindung/en enthält, die aus einer Gruppe ausgewählt wird/werden, die aus 0,50 % oder weniger Cu, 1,0 % oder weniger Ni, 0,50 % oder weniger Cr, 0,50 % oder weniger Mo , sowie 0,10 % oder weniger V besteht, und C(%) - 0,065Nb(%) - 0,025Mo(%)- 0,057V(%) 0,025 oder mehr beträgt.

3. Verfahren zum Herstellen eines geschweißten Stahlrohrs für ein Leitungsrohr, bei dem Stahl mit der in Anspruch 1 oder 2 beschriebenen Zusammensetzung auf eine Temperatur erwärmt wird, die in einen Bereich von 950 bis 1200 °C fällt, zu einem Stahlblech warmgewalzt wird und dabei eine Walzreduktionsrate in einem Temperaturbereich ohne Rekristallisation auf 60 % oder mehr eingestellt ist und eine Walz-Abschlusstemperatur in einen Bereich von Ar$_3$ bis (Ar$_3$+70 °C) fällt, und anschließend das Stahlblech beschleunigtem Abkühlen mit einer Abkühlgeschwindigkeit von 10 °C/s oder mehr von einer Temperatur von (Ar$_3$-30 °C) oder darüber auf eine Temperatur unterzogen wird, die in einen Bereich von über 300 °C bis 420 °C fällt, das Stahlblech mittels Kaltverformung in eine Stahlrohrform gebracht wird, dann Nahtschweißen mittels Durchführen von Unterpulver-Lichtbogenschweißen, bei dem die Wärmezufuhr 100 kJ/cm oder weniger beträgt, auf einen Stumpf-Abschnitt der Stahlrohrform angewendet wird, um ein Stahlrohr auszubilden, und das Stahlrohr Rohraufweitung mit einem Aufweitungsverhältnis von 0,4 % bis 1,2 % unterzogen wird.

4. Verfahren zum Herstellen eines geschweißten Stahlrohrs für ein Leitungsrohr nach Anspruch 3, wobei das Stahlblech im Anschluss an das beschleunigte Abkühlen Wiedererwärmen unterzogen wird, so dass eine Oberflächentemperatur des Stahlblechs in einen Bereich von 500 bis 700 °C fällt und die Temperatur in der Mitte des Stahlblechs unter 550 °C sinkt.

## Revendications

1. Tuyau d'acier soudé pour canalisation ayant la composition constituée, en % en masse, de 0,03 à 0,08 % de C, 0,05 % ou moins de Si, 1,00 à 2,00 % de Mn, 0,010 % ou moins de P, 0,0030 % ou moins de S, 0,06 % ou moins d'Al, 0,005 à 0,020 % de Nb, 0,005 à 0,025 % de Ti, 0,0010 à 0,0060 % de N, 0,0015 à 0,0035 % de Ca, éventuellement d'au moins un élément choisi dans le groupe constitué par 0,50 % ou moins de Cu, 1,0 % ou moins de Ni, 0,50 % ou moins de Cr, 0,50% ou moins de Mo et 0,10 % ou moins de V, et de Fe et d'impuretés inévitables en complément, où

C(%) - 0,0065Nb(%) est supérieur ou égal à 0,025,
Ti(%)/N(%) est une valeur qui se situe dans une fourchette de 2 à 4, et
une valeur Ceq exprimée par une formule suivante est supérieure ou égale à 0,30,

$$Ceq = C(\%) + Mn(\%)/6 + \{Cr(\%) + Mo(\%) + V(\%)\}/5 + \{Cu(\%) + Ni(\%)\}/15$$

un matériau de base ayant une microstructure métallique à une position à 1/4 d'une épaisseur de plaque sur un côté de surface intérieure du tuyau d'acier où une fraction de bainite est supérieure ou égale à 80 %, une fraction d'un constituant M-A (MA) est inférieure ou égale à 3 %, une fraction de cémentite est inférieure ou égale à 5 % et une grosseur moyenne de grain de bainite est inférieure ou égale à 5 $\mu$m,
une grosseur moyenne de grain de MA est inférieure ou égale à 1 $\mu$m et
une zone soudée affectée thermiquement ayant une microstructure métallique dans laquelle une fraction de bainite est supérieure ou égale à 90 % et une fraction d'un constituant M-A (MA) est inférieure ou égale à 3 %.

2. Tuyau d'acier soudé pour canalisation selon la revendication 1, la composition contenant en outre, en % en masse, un ou deux types ou plus d'éléments choisis dans un groupe constitué par 0,50 % ou moins de Cu, 1,0% ou moins de Ni, 0,50 % ou moins de Cr, 0,50 % ou moins de Mo et 0,10 % ou moins de V, et C(%) - 0,065Nb(%) - 0,025Mo(%) - 0,057V(%) est supérieur ou égal à 0,025.

3. Procédé de fabrication d'un tuyau d'acier soudé pour canalisation, dans lequel un acier ayant la composition décrite dans la revendication 1 ou 2 est chauffé à une température située dans une fourchette de 950 à 1200 °C, est laminé à chaud en une plaque d'acier, un taux de réduction par laminage dans une plage de température de non-recristallisation étant défini pour être supérieur ou égal à 60 % et une température d'achèvement de laminage étant située dans une fourchette de $Ar_3$ à ($Ar_3$ + 70 °C), après quoi la plaque d'acier est soumise à un refroidissement accéléré à une vitesse de refroidissement de 10 °C/s ou plus depuis une température supérieure ou égale à ($Ar_3$ - 30 °C) jusqu'à une température située dans une fourchette de plus de 300 °C à 420 °C et la plaque d'acier est formée en une forme de tuyau d'acier par formage à froid, puis soudée par soudage à l'arc sous flux, l'apport de chaleur, qui est inférieur ou égal à 100 kJ/cm, étant appliqué à une portion d'aboutement de la forme de tuyau d'acier pour former un tuyau d'acier, et le tuyau d'acier est soumis à un élargissement de tuyau avec un taux d'élargissement de 0,4 % à 1,2 %.

4. Procédé de fabrication d'un tuyau d'acier soudé pour canalisation selon la revendication 3, dans lequel la plaque d'acier est soumise à un réchauffage à la suite du refroidissement accéléré de sorte qu'une température de surface de plaque d'acier se situe dans une fourchette de 500 à 700 °C et une température au centre de la plaque d'acier devient inférieure à 550 °C.

EP 2 505 681 B1

[FIG.1]

[FIG.2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009127069 A
- JP 9049025 A
- JP 2003342639 A
- JP 2004035925 A
- JP 2002102931 A
- JP 2003340519 A
- JP 2008056962 A
- JP 2009052137 A